# FASCICULE DE BREVET EUROPEEN

(11) **EP 2 139 715 B1**
(45) Date de publication et mention de la délivrance du brevet: **25.01.2012**
(21) Numéro de dépôt: 08762149.6
(22) Date de dépôt: 25.02.2008
(51) Int. Cl.: B60K 26/02, B60W 20/00, B60W 30/18, B60W 10/06, B60W 10/08

(54) **DISPOSITIF DE COMMANDE DU MODE DE FONCTIONNEMENT ELECTRIQUE D'UN GROUPE MOTOPROPULSEUR HYBRIDE DE VEHICULE AUTOMOBILE, PAR ACTION SUR LA PEDALE D'ACCELERATEUR**
VORRICHTUNG ZUR STEUERUNG DES ELEKTRISCHEN BETRIEBSMODUS EINES HYBRIDEN ANTRIEBSAGGREGATS EINES HYBRIDFAHRZEUGS DURCH BETÄTIGUNG DES GASPEDALS
DEVICE FOR CONTROLLING THE ELECTRIC OPERATION MODE OF A HYBRID POWER UNIT OF A HYBRID VEHICLE BY ACTION ON THE ACCELERATOR PEDAL

(30) Priorité: 27.02.2007 FR 0753523
(43) Date de publication de la demande: 06.01.2010
(73) Titulaire: Renault SAS, 92100 Boulogne Billancourt (FR)
(72) Inventeur: JACQUET, Cédric, F-91470 Pecqueuse (FR); OUAGUENOUNI, Tariq, F-92330 Sceaux (FR); PAURD, Florent, F-75014 Paris (FR)
(86) Numéro de dépôt international: PCT/FR2008/050308
(87) Numéro de publication internationale: WO 2008/113953

(56) Documents cités:
- DE-A1- 4 133 014
- DE-A1- 19 809 026
- DE-A1-102006 012 515
- DE-U1- 29 824 319

## Description

La présente invention concerne un système et un procédé de commande d'une propulsion hybride pour véhicule automobile, comprenant au moins un moteur thermique et au moins un moteur électrique.

Un véhicule hybride intègre généralement au moins deux moteurs différents, un moteur thermique et un moteur électrique. Ces moteurs présentent des capacités motrices, et des besoins en énergie différents. Le moteur électrique n'émet aucun rejet polluant contrairement à ce qui est le cas du moteur thermique. Les moteurs sont généralement pilotés ou commandés par des calculateurs dosant les efforts consentis par chacun des organes moteurs de façon à minimiser les rejets polluants tout en conservant une adéquation de la motricité avec les demandes du conducteur.

Le document US 5 982 045 (Atsushi TABATA) divulgue un système de commande d'une propulsion hybride pour véhicule automobile, comprenant des moyens de commande des transitions entre une pluralité de modes de fonctionnement prédéterminés. Plus précisément, l'activation d'un mode de fonctionnement tout électrique est commandée lorsque aucune demande d'activation du moteur thermique n'est reçue par les moyens de commande, qu'il n'y a pas de freinage du conducteur, que la position de la pédale de commande de puissance ou pédale d'accélération est inférieure à un seuil, et que l'état de charge de la batterie est supérieure à un autre seuil.

Le document US 5 842 534 (Andrew A. FRANK) porte sur un système de commande d'une propulsion hybride pour véhicule automobile, dans lequel des moyens de commande utilisent une cartographie dépendant de l'état de charge de la batterie électrique associée au moteur électrique, et de la vitesse de déplacement du véhicule. Lorsque la vitesse de déplacement du véhicule dépasse une vitesse de seuil, ou que la charge de la batterie passe en dessous d'une charge minimale, les moyens de commande gèrent automatiquement le passage d'un fonctionnement tout électrique à un fonctionnement hybride du véhicule.

Aucun de ces documents ne permet au conducteur du véhicule de rester aisément en roulage dans un mode exclusivement électrique, notamment dans des zones géographiques dans lesquelles il peut être imposé l'absence de rejets polluants.

En outre, il est des véhicules à propulsion hybride pour lesquels il existe un fonctionnement en mode d'alimentation exclusivement électrique activé automatiquement par un calculateur, en fonction de paramètres de fonctionnement du véhicule. Toutefois, en fonctionnement exclusivement électrique, lorsque le conducteur appuie sur la pédale de commande de puissance de sorte qu'il dépasse une course limite de la pédale pour le fonctionnement exclusivement électrique, le calculateur utilise à nouveau le moteur thermique car il croit déceler une demande élevée de puissance de la part du conducteur. Aussi, ce type de fonctionnement exclusivement électrique peut, trop facilement, être arrêté, pour être ensuite relancé, ce qui implique des soubresauts du véhicule et limite le confort de ses occupants.

Dans des zones géographiques, notamment à forte densité de population, il peut être appliqué des normes antipollution imposant l'absence de rejets polluants de la part des véhicules automobiles, et dans de telles zones, d'incessants enchaînements d'arrêts et redémarrages du mode exclusivement électrique peuvent entraîner un manque de respect de ces normes.

L'invention a pour but de remédier aux divers inconvénients cités. En particulier, l'invention vise à limiter les rejets polluants, et à améliorer le confort des passagers du véhicule.

Aussi, selon un aspect de l'invention, il est proposé un système de commande d'une propulsion hybride de véhicule automobile, comprenant au moins un moteur thermique, au moins un moteur électrique, avec une pédale d'accélérateur qui constitue un moyen de commande de puissance actionnable par le conducteur du véhicule, et une unité de commande électronique. Le système comprend, en outre, un moyen de génération d'une première force de rappel sur la pédale d'accélérateur. L'unité de commande électronique est adaptée, lorsqu'un mode de fonctionnement exclusivement électrique du véhicule est activé, pour commander ledit moyen de génération de force, de sorte qu'il génère une deuxième force de rappel, plus importante que la première, lorsque la course de la pédale atteint un seuil de clés-activation du fonctionment exclusivement électrique.

Le document US 5 842 534 (Andrew A. FRANK) porte sur un système de commande d'une propulsion hybride pour véhicule automobile, dans lequel des moyens de commande utilisent une cartographie dépendant de l'état de charge de la batterie électrique associée au moteur électrique, et de la vitesse de déplacement du véhicule. Lorsque la vitesse de déplacement du véhicule dépasse une vitesse de seuil, ou que la charge de la batterie passe en dessous d'une charge minimale, les moyens de commande gèrent automatiquement le passage d'un fonctionnement tout électrique à un fonctionnement hybride du véhicule.

Aucun de ces documents ne permet au conducteur du véhicule de rester aisément en roulage dans un mode exclusivement électrique, notamment dans des zones géographiques dans lesquelles il peut être imposé l'absence de rejets polluants.

En outre, il est des véhicules à propulsion hybride pour lesquels il existe un fonctionnement en mode d'alimentation exclusivement électrique activé automatiquement par un calculateur, en fonction de paramètres de fonctionnement du véhicule. Toutefois, en fonctionnement exclusivement électrique, lorsque le conducteur appuie sur la pédale de commande de puissance de sorte qu'il dépasse une course limite de la pédale pour le fonctionnement exclusivement électrique, le calculateur utilise à nouveau le moteur thermique car il croit déceler une demande élevée de puissance de la part du conducteur. Aussi, ce type de fonctionnement exclusivement électrique peut, trop facilement, être arrêté, pour être ensuite relancé, ce qui implique des soubresauts du véhicule et limite le confort de ses occupants.

Dans des zones géographiques, notamment à forte densité de population, il peut être appliqué des normes antipollution imposant

On pourra également se référer au document DE 42 33 014 qui décrit une propulsion hybride pour véhicule automobile comprenant un moteur thermique, un moteur électrique coulé à au moins une roue, un générateur électrique couplée aux roues du véhicule, une pédale d'accélérateur un moyen de génération d'une force de rappel sur la pédale d'accélérateur, et une unité de commande électronique comprenant un moyen de générer une seconde force de rappel sur la pédale d'accélérateur.

Ainsi, lorsque le mode de fonctionnement exclusivement électrique peut être activé automatiquement par l'unité de commande électronique ou sur demande du conducteur, la valeur de la force de rappel est différente selon que le mode de fonctionnement exclusivement électrique a été activé sur demande du conducteur, ou automatiquement activé par l'unité de commande électronique.

Selon un mode de réalisation, la force de rappel générée lorsque le mode de fonctionnement exclusivement électrique est activé par lesdits premiers moyens d'activation et désactivation automatiques, est inférieure à la force de rappel additionnelle générée lorsque le mode de fonctionnement exclusivement électrique est activé par lesdits deuxièmes moyens d'activation et désactivation actionnables par le conducteur.

Ainsi, lorsque le conducteur veut forcer le fonctionnement en mode exclusivement électrique du véhicule, il lui sera plus facile de ne pas dépasser une course limite de la pédale de commande de puissance au-delà de laquelle l'unité de commande électronique activerait le fonctionnement en mode hybride, car la puissance demandée par le conducteur serait supérieure à celle pouvant être fournie en fonctionnement exclusivement électrique. Grâce à cette disposition, il n'est pas obligatoire, pour le conducteur, d'appuyer à fond sur la pédale (position « kick-down ») pour désactiver le mode électrique et passer en mode hybride. De plus, on obtient une transition de puissance plus continue.

Dans un mode de réalisation, le système comprend des premiers moyens de réglage, actionnables par le conducteur, de la valeur de ladite force de rappel.

Le conducteur peut alors régler la force de rappel qu'il souhaite ressentir, et peut ainsi différencier, à sa convenance, les modes de fonctionnement exclusivement électriques activés automatiquement ou sur son ordre. Les moyens de réglage de la force de rappel peuvent, par exemple, comprendre une molette de réglage, une interface tactile, ou tout autre élément de réglage permettant de régler la valeur ou intensité de la force de rappel.

Selon un mode de réalisation, le système comprend des deuxièmes moyens de réglage, actionnables par le conducteur, dudit seuil de course de la pédale.

Le conducteur peut alors régler le seuil de course de la pédale qu'il souhaite avoir, et peut ainsi différencier, à sa convenance, les modes de fonctionnement exclusivement électriques activés automatiquement ou sur son ordre. Les moyens de réglage du seuil de course de la pédale peuvent, par exemple, comprendre une molette de réglage, une interface tactile, ou tout autre élément de réglage permettant de régler la course de seuil.

Dans un mode de réalisation, l'unité de commande électronique est adaptée pour commander ledit moyen de génération de force de sorte que ledit seuil et/ou la valeur de ladite force de rappel, dépendent desdits moyens d'activation et désactivation ayant activé le mode de fonctionnement exclusivement électrique.

Ainsi, le conducteur peut différencier, à sa convenance, la valeur de la force de rappel, ainsi que le seuil de course de la pédale, correspondant à une puissance du groupe motopropulseur pour laquelle l'unité de commande électronique commande la mise en route du moteur thermique, en fonction de son activation automatique ou volontaire. Le conducteur peut, par exemple, lorsqu'il impose un roulage en mode exclusivement électrique, augmenter la course de seuil, et la force de rappel, de manière à limiter le risque de demander une puissance supérieure à la puissance maximale disponible en fonctionnement exclusivement électrique, et éviter que l'unité de commande électronique active le mode de fonctionnement hybride.

Selon un mode de réalisation, le système comprenant des moyens de stockage d'énergie électrique, l'unité de commande électronique est adaptée pour commander ledit moyen de génération de force de sorte que ledit seuil de course de la pédale dépend de la charge desdits moyens de stockage d'énergie électrique.

Dans un mode de réalisation, l'unité de commande électronique est adaptée pour désactiver le mode de fonctionnement exclusivement électrique du véhicule lorsque la course de la pédale est supérieure à ladite course de seuil.

En variante, l'unité de commande électronique est adaptée, lorsque la course de la pédale est supérieure audit seuil, pour désactiver le mode de fonctionnement exclusivement électrique du véhicule et activer le mode de fonctionnement hybride pendant un intervalle de temps dépendant de paramètres de fonctionnement du véhicule.

Ainsi, lorsque le conducteur demande une puissance supérieure à la puissance maximale disponible en mode exclusivement électrique, l'unité de commande électronique, si cela est possible, active le mode de fonctionnement hybride pendant un intervalle de temps limité qui dépend de paramètres de fonctionnement du véhicule, tels la vitesse longitudinale du véhicule, ou la course de la pédale d'accélération, puis commande automatiquement le retour au mode de fonctionnement exclusivement électrique forcé par le conducteur.

Selon un autre aspect de l'invention, il est également proposé un procédé de commande d'un groupe motopropulseur hybride de véhicule automobile, comprenant au moins un moteur thermique, au moins un moteur électrique, avec une pédale d'accélérateur qui constitue un moyen de commande de puissance actionnable par le conducteur du véhicule. Lorsqu'un mode de fonctionnement exclusivement électrique du véhicule est activé, on génère une force de rappel sur la pédale lorsque la course de la pédale atteint un seuil correspondant à une puissance du groupe motopropulseur pour laquelle l'unité de commande électronique commande la mise en route du moteur thermique.

D'autres buts, caractéristiques et avantages de l'invention apparaîtront à la lecture de la description suivante, de quelques exemples nullement limitatifs, et faite en référence aux dessins annexés, sur lesquels :
- la figure 1 représente schématiquement un véhicule automobile hybride équipé d'un système selon un aspect de l'invention ;
- la figure 2 représente schématiquement une pédale de commande de puissance à retour d'effort munie d'un dispositif commandé de régénération de force de rappel variable ; et
- la figure 3 illustre le fonctionnement du système de la figure 1.

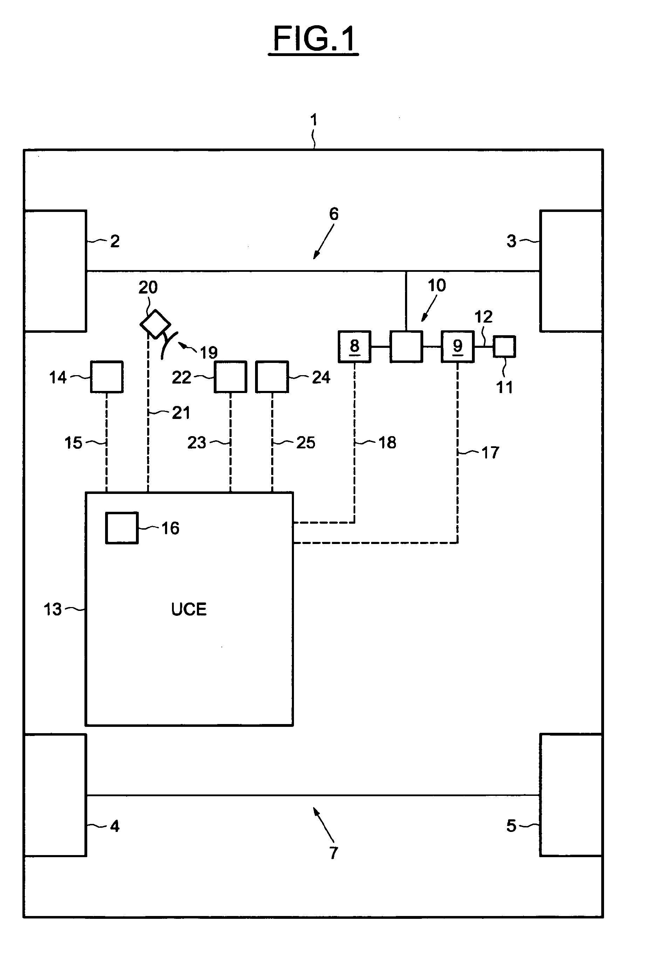

Sur la figure 1, est représenté un véhicule automobile hybride 1 à quatre roues, 2, 3, 4 et 5.

Le train avant, référencé de manière générale 6, comprend la roue avant gauche 2 et la roue avant droite 3. Le train arrière, référencé de manière générale 7, comprend la roue arrière gauche 4 et la roue arrière droite 5. Dans cet exemple, un moteur thermique 8 et un moteur électrique 9, entraînent en rotation le train avant 6 par l'intermédiaire d'une transmission 10. Dans d'autres configurations, le moteur électrique peut être lié au train arrière ou être monté en aval de la transmission. Le moteur électrique 9 est alimenté par une batterie d'accumulateurs électriques 11, par l'intermédiaire d'un élément conducteur 12. Lors d'un fonctionnement en mode de régénération ou de récupération d'énergie, le moteur électrique 9 fonctionnant en générateur, peut fournir de l'énergie électrique à la batterie d'accumulateurs électriques 11 par l'intermédiaire de l'élément conducteur 12.

Une unité de commande électronique 13, permettant de commander de nombreux dispositifs embarqués à bord du véhicule 1, est connectée à de nombreux éléments du véhicule 1, et reçoit de nombreuses informations par l'intermédiaire de capteurs ou estimateurs, non représentés sur la figure 1.

Un élément 14 d'activation et désactivation, actionnable par le conducteur, permet d'activer ou désactiver un mode de fonctionnement exclusivement électrique du véhicule. Cet élément 14 peut comprendre un bouton-poussoir, un bouton à position, un rotacteur, une pédale, un levier, ou une interface vocale, pour transmettre à l'unité de commande électronique 13 un ordre d'activation ou de désactivation du fonctionnement du véhicule 1 dans un mode tout électrique, ou, en d'autres termes, avec une puissance de fonctionnement fournie exclusivement par le moteur électrique 9 et la batterie d'accumulateurs électriques 11. L'élément 14 d'activation et désactivation est relié à l'unité de commande électronique 13 par une connexion 15.

L'unité de commande électronique 13 comprend, en outre, un module 16 d'activation et désactivation automatique, permettant d'activer ou désactiver un mode de fonctionnement exclusivement électrique du véhicule, en fonction de valeurs de paramètres de fonctionnement du véhicule, telle que la vitesse longitudinale du véhicule.

L'unité de commande électronique 13 est connectée au moteur électrique 9 par une connexion 17, et au moteur thermique 8 par une connexion 18, permettant à l'unité de commande électronique 13 de gérer le fonctionnement du moteur électrique 9 et du moteur thermique 8.

Une pédale d'accélérateur 19 à retour d'effort qui constitue une pédale de commande de puissance actionnable par le conducteur, est munie d'un module 20 commandé, de génération de force de rappel variable, relié à l'unité de commande électronique 13 par une connexion 21. Le module 20 de génération de force permet de générer une augmentation ponctuelle de l'effort résistant de la pédale d'accélération 19 d'une valeur qui s'additionne à l'effort nominal de résistance de la pédale, créant ainsi une sensation de point dur. Cette sensation de point dur supplémentaire permet au conducteur de ressentir la fin de la course de la pédale 19 utile pour le fonctionnement en mode exclusivement électrique du véhicule 1.

En d'autres termes, cette sensation de point dur représente une interface homme-machine haptique, permettant d'informer le conducteur d'une limite de demande de puissance, au-delà de laquelle le véhicule doit fonctionner en mode hybride pour fournir une telle puissance. Une interface haptique est une interface qui permet d'interagir avec un environnement virtuel ou réel, en obtenant un retour d'effort qui donne des informations sur l'action effectuée.

Ainsi, lorsque le véhicule est en roulage exclusivement électrique, si le conducteur désire avoir la pleine puissance disponible en mode électrique, il lui suffit d'appuyer sur la pédale 19 jusqu'à ressentir ce point dur supplémentaire, et attendre que les actionneurs électriques répondent à sa demande. Ce système permet d'augmenter de manière conséquente la réactivité du véhicule en mode exclusivement électrique.

Un module 22, de réglage de l'intensité de la force de rappel additionnelle, relié à l'unité de commande électronique 13 par une connexion 23, permet au conducteur de régler la valeur de la force de rappel additionnelle générée pour former le point dur supplémentaire correspondant à la course utile maximale de la pédale 19 correspondant au mode de fonctionnement exclusivement électrique du véhicule 1. Ce module de réglage 22 peut comprendre, par exemple, une molette de réglage, ou une interface tactile. Le module de réglage 22 de l'intensité de la force de rappel additionnelle générée par le module 20 permet, en outre, au conducteur de pouvoir différencier un roulage en mode exclusivement électrique activé automatiquement par l'unité de commande électronique 13, d'un roulage au mode exclusivement électrique demandé par le conducteur.

Un module de réglage 24, actionnable par le conducteur et permettant de régler le seuil de course de la pédale, correspondant à une puissance du groupe motopropulseur pour laquelle l'unité de commande électronique commande la mise en route du moteur thermique, est relié à l'unité de commande électronique 13 par une connexion 25. Le module de réglage 24 du seuil de course de la pédale 19 peut, par exemple, comprendre une molette de réglage ou une interface tactile. Ainsi, le conducteur peut également différencier un roulage en mode exclusivement électrique activé automatiquement par l'unité de commande électronique 13, ou demandé par le conducteur. En variante, le système peut comprendre, soit seulement le module de réglage 22 de la valeur de la force de rappel additionnelle, soit uniquement le module de réglage 24 du seuil de course de la pédale 19 correspondant à la mise en route du moteur thermique 8.

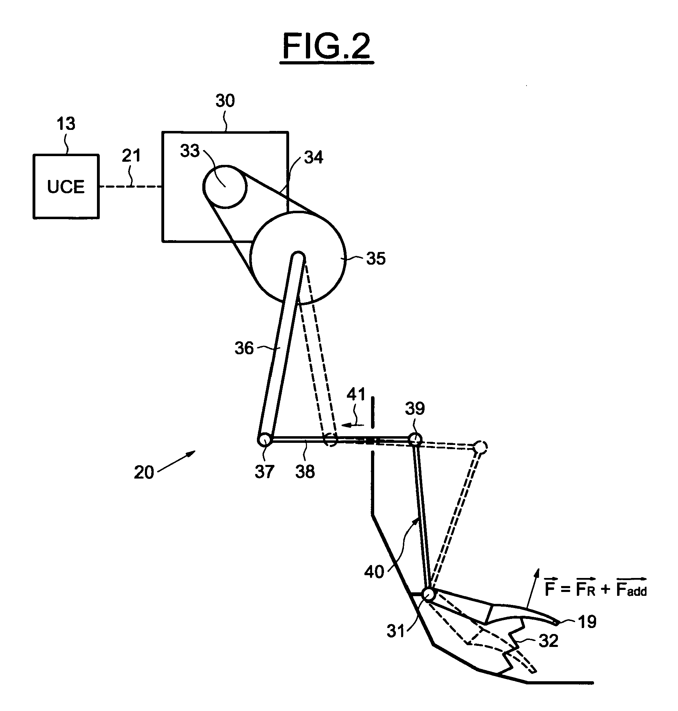

La figure 2 illustre le fonctionnement de la pédale 19 à retour d'effort munie du module 20 de génération de force, telle que décrite par exemple dans la demande de brevet FR-A-2 855 465 à laquelle on pourra se référer.

Le module 20 comprend notamment un actionneur électrique 30, commandé par l'unité de commande électronique 13 par l'intermédiaire de la connexion 21. La pédale 19 est montée pivotante sur le châssis du véhicule automobile 1 autour d'un axe 31 à ressort de rappel 32, schématiquement représenté, qui rappelle la pédale 19 dans sa position de repos.

L'actionneur, par exemple un moteur électrique 30, comprend un premier élément d'entraînement 33 d'une courroie 34, entraînant en rotation un deuxième élément d'entraînement 35. Une biellette 36 est fixée au deuxième élément d'entraînement 35, et son extrémité à rotule 37 est fixée à une biellette intermédiaire 38 dont la seconde extrémité 39, également à rotule, est articulée sur une biellette 40 solidaire de la pédale d'accélération 19. Une traction exercée sur la tige 38, dans le sens de la flèche 41, permet de créer une force de rappel additionnelle sur la pédale d'accélération 19. Cette force de rappel additionnelle s'ajoute à la force de rappel, toujours présente, du ressort de rappel 32.

En variante, tout autre type de pédale de commande de puissance à retour d'effort munie d'un module de génération de force, convient à la présente invention, notamment des pédales munies de modules commandés de génération de force de rappel variable comprenant un moteur électrique linéaire, ou un moteur électrique tournant à engrenage de pignons.

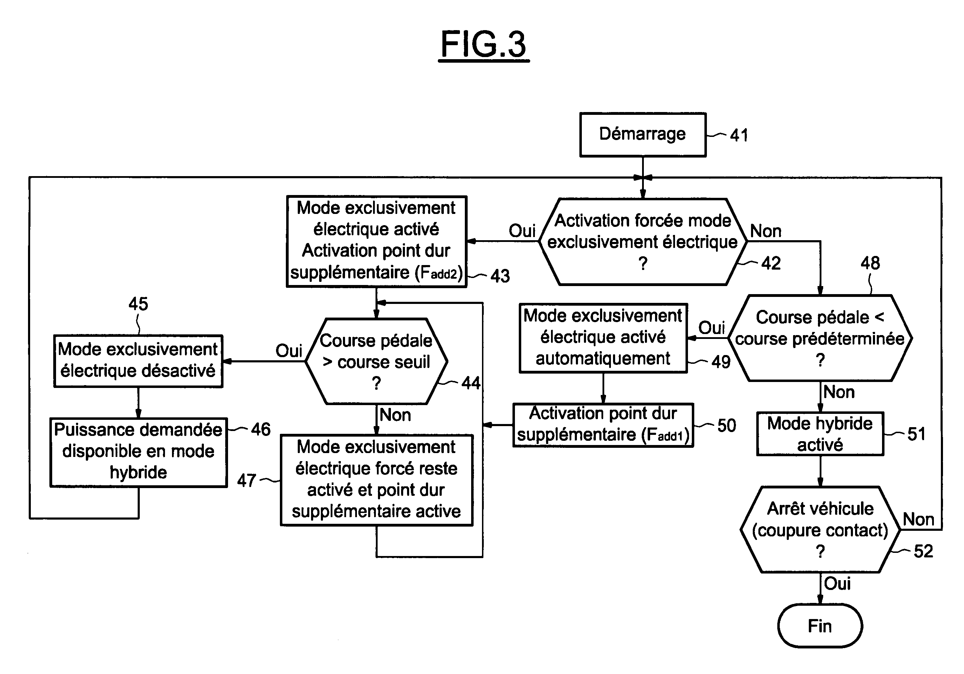

On va maintenant décrire le fonctionnement du système, en se référant à la figure 3. Le procédé débute par une étape 41 de démarrage du véhicule. Puis, lors d'une étape de test 42, on teste si une demande d'activation du mode de fonctionnement exclusivement électrique du véhicule 1 est effectuée par le conducteur au moyen de l'élément 14 d'activation et désactivation.

Lorsqu'une demande d'activation forcée du mode exclusivement électrique est détectée à l'étape 42, l'unité de commande électronique 13 active le mode de fonctionnement exclusivement électrique, et commande le module de génération de force de rappel 20, de sorte qu'il génère une force de rappel additionnelle F_{add2} lorsque la course de la pédale 19 atteint un seuil. En d'autres termes, l'unité de commande électronique 13 commande l'activation d'un point dur supplémentaire spécifique au mode exclusivement électrique.

L'unité de commande électronique 13 teste, lors d'une étape 44, si le conducteur appuie sur la pédale de commande de puissance 19, de sorte que la course de la pédale 19 dépasse une course de seuil correspondant à une puissance du groupe motopropulseur pour laquelle l'unité de commande électronique 13 commande la mise en route du moteur thermique 8. Lorsque la course de la pédale 19 est supérieure à ce seuil, le mode de fonctionnement exclusivement électrique est désactivé lors d'une étape 45. Le véhicule fonctionne alors en mode hybride, et la puissance demandée par le conducteur est disponible, dans une étape 46.

A contrario, lors d'un roulage forcé en mode exclusivement électrique, tant que la course de la pédale 19 reste inférieure ou égale au seuil, le mode exclusivement électrique forcé reste activé, et le point dur supplémentaire reste activé, dans une étape 47.

Lors du test de l'étape 42, s'il n'est pas détecté de demande d'activation forcée du mode exclusivement électrique par le conducteur, l'unité de commande électronique 13 teste, lors d'une étape 48, si la course de la pédale d'accélération 19 reste inférieure à une course prédéterminée. Si tel est le cas, l'unité de commande électronique 13 active automatiquement le mode de fonctionnement exclusivement électrique, dans une étape 49. L'unité de commande électronique 13 commande alors le module 20 de génération de force, de sorte qu'il génère une force de rappel additionnelle F_{add1} lorsque la course de la pédale d'accélération 19 atteint un seuil. En d'autres termes, un point dur supplémentaire est activé, par exemple avec une force de rappel additionnelle F_{add1} inférieure à la force de rappel additionnelle F_{add2} du mode exclusivement électrique forcé sur demande du conducteur. En outre, comme expliqué précédemment, le seuil de course de la pédale 19 correspondant à l'activation de ce point dur supplémentaire, peut être différent du seuil correspondant au mode exclusivement électrique activé sur demande du conducteur, de manière à ce que le fonctionnement du véhicule soit optimisé par différentiation de ces deux modes de fonctionnement exclusivement électriques. L'unité de commande électronique 13 passe ensuite de l'étape 50 à l'étape 44 de test portant sur la course de la pédale 19.

Lors du test de l'étape 48, si la course de la pédale 19 est supérieure ou égale à ladite course prédéterminée, l'unité de commande électronique 13 active le mode de fonctionnement hybride du véhicule 1, ou, en d'autres termes, active à la fois le moteur thermique 8 et le moteur électrique 9, lors d'une étape 51.

Puis, l'unité de commande électronique 13 teste, lors d'une étape 52, que le véhicule est arrêté, le conducteur ayant coupé le contact, et, si c'est le cas, l'unité de commande électronique 13 met fin au procédé. Lorsque le conducteur ne coupe pas le contact, l'unité de commande électronique 13 continue le procédé à l'étape 42 de test d'une activation forcée du mode exclusivement électrique.

La présente invention permet au conducteur du véhicule, lorsqu'il est en roulage en mode exclusivement électrique, de ne pas quitter ce mode de roulage de manière intempestive, ce qui améliore sensiblement la stabilité du fonctionnement en mode exclusivement électrique du véhicule, et permet d'améliorer le respect des normes antipollution ainsi que le confort des passagers.

L'invention permet également de différencier aisément un mode exclusivement électrique forcé sur demande du conducteur d'un mode de fonctionnement exclusivement électrique commandé automatiquement, et d'adapter ainsi le fonctionnement du véhicule en fonction du mode exclusivement électrique activé.

## Revendications

1. Système de commande d'un groupe motopropulseur hybride (8, 9) de véhicule automobile (1), comprenant au moins un moteur thermique (8), au moins un moteur électrique (9), avec une pédale d'accélérateur qui constitue un moyen de commande de puissance actionnable par le conducteur du véhicule, et une unité de commande électronique (13), **caractérisé en ce qu'**il comprend un moyen (20) de génération d'une première force de rappel sur la pédale, et **en ce que** l'unité de commande électronique (13) est adaptée, lorsqu'un mode de fonctionnement exclusivement électrique du véhicule (1) est activé, pour commander ledit moyen (20) de génération de force de sorte qu'il génère une deuxième force de rappel plus importante que la première, lorsque la course de la pédale (19) atteint un seuil de désactivation du fonctionnement exclusivement électrique.

2. Système selon la revendication 1, comprenant, en outre, des premiers moyens d'activation et désactivation automatiques (16), et des deuxièmes moyens d'activation et désactivation (14) actionnables par le conducteur, pour activer ou désactiver un mode de fonctionnement exclusivement électrique du véhicule (1), dans lequel l'unité de commande électronique (13) est adaptée pour commander ledit moyen (20) de génération de force de sorte qu'il génère une force de rappel dont la valeur dépend desdits moyens d'activation et désactivation (14, 16) ayant activé le mode de fonctionnement exclusivement électrique.

3. Système selon la revendication 2 dans lequel l'unité de commande électronique (13) est adaptée pour commander ledit moyen (20) de génération de force de sorte que ledit seuil et/ou la valeur de ladite force de rappel, dépendent desdits moyens d'activation et désactivation (16, 14) ayant activé le mode de fonctionnement exclusivement électrique.

4. Système selon la revendication 2 ou 3, dans lequel la force de rappel générée lorsque le mode de fonctionnement exclusivement électrique est activé par lesdits premiers moyens d'activation et désactivation automatiques (16), est inférieure à la force de rappel générée lorsque le mode de fonctionnement exclusivement électrique est activé par lesdits deuxièmes moyens d'activation et désactivation (14) actionnables par le conducteur.

5. Système selon l'une des revendications précédentes, comprenant des premiers moyens de réglage (22), actionnables par le conducteur, de la valeur de ladite force de rappel.

6. Système selon l'une des revendications précédentes, comprenant des deuxièmes moyens de réglage (24), actionnables par le conducteur, dudit seuil de course de la pédale (19).

7. Système selon l'une des revendications 1 à 6, comprenant des moyens de stockage (11) d'énergie électrique, et dans lequel l'unité de commande électronique (13) est adaptée pour commander ledit moyen (20) de génération de force de sorte que ledit seuil de course de la pédale (19) dépend de la charge desdits moyens de stockage (11) d'énergie électrique.

8. Système selon l'une des revendications 1 à 7, dans lequel l'unité de commande électronique (13) est adaptée pour désactiver le mode de fonctionnement exclusivement électrique du véhicule (1) lorsque la course de la pédale (19) est supérieure audit seuil.

9. Système selon l'une des revendications 1 à 7, dans lequel l'unité de commande électronique (13) est adaptée, lorsque la course de la pédale (19) est supérieure audit seuil, pour désactiver le mode de fonctionnement exclusivement électrique du véhicule (1) et activer le mode de fonctionnement hybride pendant un intervalle de temps dépendant de paramètres de fonctionnement du véhicule (1).

10. Procédé de commande d'un groupe motopropulseur hybride (8, 9) de véhicule automobile (1), comprenant au moins un moteur thermique (8), au moins un moteur électrique (9), avec une pédale d'accélérateur (19) constituant un moyen de commande de puissance actionnable par le conducteur du véhicule (1) **caractérisé en ce que**, lorsqu'un mode de fonctionnement exclusivement électrique du véhicule (1) est activé, on génère une force de rappel sur la pédale (19) lorsque la course de la pédale (19) atteint un seuil correspondant à une puissance du groupe motopropulseur pour laquelle l'unité de commande électronique commande la mise en route du moteur thermique.

## Claims

1. System for controlling a hybrid power plant (8, 9) of a motor vehicle (1), comprising at least one combustion engine (8), at least one electric motor (9), with an accelerator pedal which constitutes a power-controlling means that can be actuated by the driver of the vehicle, and an electronic control unit (13), **characterized in that** it comprises a means (20) of generating a first return force on the pedal, and **in that** the electronic control unit (13) is able, when an exclusively electrical mode of operation of the vehicle (1) is activated, to control said force-generation means (20) in such a way that it generates a second return force, higher than the first, when the pedal travel (19) reaches a deactivation threshold for deactivating the exclusively electrical operation.

2. System according to Claim 1, further comprising first, automatic, activation and deactivation means (16) and second activation and deactivation means (14) that can be actuated by the driver, for activating or deactivating an exclusively electrical mode of operation of the vehicle (1), in which system the electronic control unit (13) is able to control said force-generation means (20) in such a way that it generates a return force the value of which is dependent on which of said activation and deactivation means (14, 16) activated the exclusively electric mode of operation.

3. System according to Claim 2, in which the electronic control unit (13) is able to control said force-generation means (20) in such a way that said threshold and/or the value of said return force is/are dependent on which of said activation and deactivation means (16, 14) activated the exclusively electric mode of operation.

4. System according to Claim 2 or 3, in which the return force generated when the exclusively electric mode of operation is activated by said first, automatic, activation and deactivation means (16), is lower than the return force generated when the exclusively electric mode of operation is activated by said second activation and deactivation means (14) that can be actuated by the driver.

5. System according to one of the preceding claims, comprising first adjusting means (22), that can be actuated by the driver, for adjusting the value of said return force.

6. System according to one of the preceding claims, comprising second adjusting means (24), that can be actuated by the driver, for adjusting said travel threshold for the pedal (19).

7. System according to one of Claims 1 to 6, comprising electrical energy storage means (11), and in which the electronic control unit (13) is able to control said force-generation means (20) in such a way that said travel threshold for the pedal (19) depends on the charge of said electrical energy storage means (11).

8. System according to one of Claims 1 to 7, in which the electronic control unit (13) is able to deactivate the exclusively electric mode of operation of the vehicle (1) when the travel of the pedal (19) is greater than said threshold.

9. System according to one of Claims 1 to 7, in which the electronic control unit (13) is able, when the travel of the pedal (19) is above said threshold, to deactivate the exclusively electric mode of operation of the vehicle (1) and activate the hybrid mode of operation for a period of time that is dependent on operating parameters pertaining to the vehicle (1).

10. Method of controlling a hybrid power plant (8, 9) of a motor vehicle (1) comprising at least one combustion engine (8), at least one electric motor (9), with an accelerator pedal (19) constituting a power-control means that can be actuated by the driver of the vehicle (1), **characterized in that** when an exclusively electric mode of operation of the vehicle (1) is activated, a return force is generated on the pedal (19) when the travel of the pedal (19) reaches a threshold corresponding to a power plant power for which the electronic control unit commands the starting of the combustion engine.

## Patentansprüche

1. Steuersystem einer Hybridantriebseinheit (8, 9) eines Kraftfahrzeugs (1), die mindestens einen Verbrennungsmotor (8), mindestens einen Elektromotor (9), mit einem Gaspedal, das eine vom Fahrer des Fahrzeugs betätigbare Leistungssteuereinrichtung bildet, und eine elektronische Steuereinheit (13) enthält, **dadurch gekennzeichnet, dass** es eine Einrichtung (20) zur Erzeugung einer ersten Rückstellkraft auf das Pedal enthält, und dass die elektronische Steuereinheit (13) geeignet ist, wenn eine ausschließlich elektrische Betriebsart des Fahrzeugs (1) aktiviert ist, die Krafterzeugungseinrichtung (20) so zu steuern, dass sie eine zweite Rückstellkraft größer als die erste erzeugt, wenn der Hub des Pedals (19) eine Deaktivierungsschwelle des ausschließlich elektrischen Betriebs erreicht.

2. System nach Anspruch 1, das außerdem erste automatische Aktivierungs- und Deaktivierungseinrichtungen (16) und zweite vom Fahrer betätigbare Aktivierungs- und Deaktivierungseinrichtungen (14) enthält, um eine ausschließlich elektrische Betriebsart des Fahrzeugs (1) zu aktivieren oder zu desaktivieren, bei dem die elektronische Steuereinheit (13) geeignet ist, um die Krafterzeugungseinrichtung (20) so zu steuern, dass sie eine Rückstellkraft erzeugt, deren Wert von den Aktivierungs- und Deaktivierungseinrichtungen (14, 16) abhängt, die die ausschließlich elektrische Betriebsart aktiviert haben.

3. System nach Anspruch 2, bei dem die elektronische Steuereinheit (13) geeignet ist, um die Krafterzeugungseinrichtung (20) so zu steuern, dass die Schwelle und/oder der Wert der Rückstellkraft von den Aktivierungs- und Deaktivierungseinrichtungen (16, 14) abhängen, die die ausschließlich elektrische Betriebsart aktiviert haben.

4. System nach Anspruch 2 oder 3, bei dem die Rückstellkraft, die erzeugt wird, wenn die ausschließlich elektrische Betriebsart von den ersten automatischen Aktivierungs- und Deaktivierungseinrichtung (16) aktiviert wird, geringer als die Rückstellkraft ist, die erzeugt wird, wenn die ausschließlich elektrische Betriebsart von den vom Fahrer betätigbaren zweiten Aktivierungs- und Deaktivierungseinrichtungen (14) aktiviert wird.

5. System nach einem der vorhergehenden Ansprüche, das erste vom Fahrer betätigbare Einstelleinrichtungen (22) des Werts der Rückstellkraft enthält.

6. System nach einem der vorhergehenden Ansprüche, das zweite vom Fahrer betätigbare Einstelleinrichtungen (24) der Hubschwelle des Pedals (19) enthält.

7. System nach einem der Ansprüche 1 bis 6, das Speichereinrichtungen (11) elektrischer Energie enthält, und bei dem die elektronische Steuereinheit (13) geeignet ist, um die Krafterzeugungseinrichtung (20) so zu steuern, dass die Hubschwelle des Pedals (19) von der Ladung der Speichereinrichtungen (11) elektrischer Energie abhängt.

8. System nach einem der Ansprüche 1 bis 7, bei dem die elektronische Steuereinheit (13) geeignet ist, um die ausschließlich elektrische Betriebsart des Fahrzeugs (1) zu desaktivieren, wenn der Hub des Pedals (19) höher als die Schwelle ist.

9. System nach einem der Ansprüche 1 bis 7, bei dem die elektronische Steuereinheit (13) geeignet ist, wenn der Hub des Pedals (19) größer als die Schwelle ist, die ausschließlich elektrische Betriebsart des Fahrzeugs (1) zu desaktivieren und die hybride Betriebsart während eines Zeitintervalls zu aktivieren, das von Betriebsparametern des Fahrzeugs (1) abhängt.

10. Verfahren zur Steuerung einer Hybridantriebseinheit (8, 9) eines Kraftfahrzeugs (1), die mindestens einen Verbrennungsmotor (8) und mindestens einen Elektromotor (9) enthält, mit einem Gaspedal (19), das eine vom Fahrer des Fahrzeugs (1) betätigbare Leistungssteuerungseinrichtung bildet, **dadurch gekennzeichnet, dass**, wenn eine ausschließlich elektrische Betriebsart des Fahrzeugs (1) aktiviert ist, eine Rückstellkraft auf das Pedal (19) erzeugt wird, wen der Hub des Pedals (19) eine Schwelle erreicht, die einer Leistung der Antriebseinheit entspricht, bei der die elektronische Steuereinheit den Start des Verbrennungsmotors steuert.
